# EUROPEAN PATENT APPLICATION

(11) **EP 1 598 404 A1**
(43) Date of publication of application: **23.11.2005**
(21) Application number: 05252847.8
(22) Date of filing: 10.05.2005
(51) Int. Cl.: C09J 177/00, C09J 177/08, B65D 53/06, B65B 7/28

(54) **Retort container, and hot melt adhesive therefor**

(30) Priority: 17.05.2004 US 847270
(71) Applicant: Sonoco Development, Inc., Hartsville, South Carolina 29550 (US)
(72) Inventor: Nomula, Srinivas, Hartsville South Carolina 29550 (US)
(74) Representative: Kinsler, Maureen Catherine

(57) **Abstract**

A retort container comprises a container body (12) structured and arranged for holding a food product, the container body (12) defining an opening and a sealing surface (20) surrounding the opening, and a lid (14) bonded to the sealing surface (20) of the container body (12) to close the opening, the lid (14) being bonded to the sealing surface (20) with a hot melt adhesive (40). The adhesive (40) comprises a polyamide resin blended with a second resin that raises the glass transition temperature of the adhesive above the glass transition temperature of the polyamide resin alone, the adhesive (40) bonding the lid (14) to the sealing surface (20) with a temperature-dependent bond strength that is relatively low at room temperature and substantially higher at retort temperatures of 100°C to 120°C.

## Description

### BACKGROUND OF THE INVENTION

The invention relates to containers for products, and more particularly relates to retort containers for food.

Retort containers are containers that are hermetically sealed after filling with a food product, and are then heated to a temperature of about 100° C to 120° C for a period of time to ensure that all microorganisms in the container have been killed. The chief advantages of retort containers is that they do not require refrigeration prior to opening, and they can be stored for long periods of time in their initially sealed condition. For many years, metal cans were the predominant type of retort container.

More recently, plastic retort containers have been developed. Plastic containers are attractive for various reasons, including microwavability. One of the challenges with plastic retort containers is the closure system. More particularly, the container lid must be hermetically sealed to the container with sufficient strength to withstand the elevated temperature and pressure conditions during retort sterilization; on the other hand, the seal strength must not be so high that the consumer finds it difficult or impossible to remove the lid. Retort integrity and ease of opening are usually at odds with each other, such that anything that is done to improve retort integrity has a deleterious effect on ease of opening, and vice versa.

Prior to the present invention, plastic retort containers have generally included some type of membrane lid that is heat-sealed to the container. The difficulties of accurately controlling the seal strength of heat seals are well known. For instance, some heat seal materials such as SURLYN® (ionomer resin) have a relatively narrow heat sealing temperature window within which the resulting seal strength is in a desirable range. If the sealing temperature is too low, the seal strength may be inadequate to prevent failure during retort; if the temperature is too high, the seal strength may be so great that the consumer cannot remove the lid. It can be difficult to control the sealing temperature with sufficient accuracy to stay within the desired window.

Other requirements for all-plastic retort containers and lids include high-barrier performance against water vapor and oxygen, and fast sealing speed. The high-barrier performance must be achieved without the use of metal foil, which has commonly been used in many retort containers. Fast sealing speed is difficult to achieve with all-plastic lids because induction sealing cannot be used, and direct thermal heat sealing is slow because of the poor thermal conductivity of plastic.

### BRIEF SUMMARY OF THE INVENTION

The invention addresses the above needs and achieves other advantages, by providing an all-plastic retort container wherein the lid is adhesively sealed to the container as opposed to being heat-sealed to the container. The adhesive employed for sealing the lid to the container is specially formulated to provide a temperature-dependent bond, such that at room temperature the bond strength is relatively low, while at retort temperatures of 100° C to 120° C the bond strength is higher.

In one embodiment of the invention, a retort container comprises a container body structured and arranged for holding a food product, the container body defining an opening and a sealing surface surrounding the opening, and a lid bonded to the sealing surface of the container body to close the opening, the lid being bonded to the sealing surface with a hot melt adhesive. The adhesive comprises a polyamide resin blended with a second resin that raises the glass transition temperature of the adhesive above the glass transition temperature of the polyamide resin alone, the adhesive bonding the lid to the sealing surface with a temperature-dependent bond strength that is relatively low at room temperature and substantially higher at retort temperatures of 100° C to 120° C.

The hot melt adhesive preferably has a glass transition temperature (Tg) close to room temperature, for example about 20° C to 40° C. A preferred adhesive comprises a substantially amorphous polyamide resin as a primary component. The polyamide resin can have a T_{g} that is less than or equal to 0° C. An example of a suitable polyamide resin is UNI-REZ® 2617 available from Arizona Chemical of Jacksonville, Florida. A second resin is added to the polyamide resin in sufficient amount to raise the T_{g} of the resulting composition to about room temperature. The second resin can comprise a maleic modified rosin ester. An example of a suitable second resin is a maleic modified glycerine ester of tall oil rosin such as SYLVACOTE® 7071 available from Arizona Chemical of Jacksonville, Florida.

As an example, the adhesive can comprise a polyamide resin and a maleic modified rosin ester, wherein the maleic modified rosin ester comprises about 10 to about 20 weight percent of the adhesive.

The invention is applicable to a wide range of container types and configurations. As one example, the container body can be thermoformed from an all-plastic high-barrier sheet. The sheet can have a structure, for example, of {polypropylene / tie / EVOH / tie / polypropylene}. The polypropylene layers are good barriers against moisture, while the ethylene vinyl alcohol copolymer (EVOH) layer provides oxygen barrier performance. The sheet can be formed by coextrusion or other processes.

Alternatively, the container body can be formed by a coextrusion blow-molding process. For example, a parison can be coextruded as a multi-layer structure such as {polypropylene / tie / EVOH / tie / polypropylene} and then enclosed in a mold and inflated to form the container body.

The lid similarly can comprise a multi-layer structure such as {polypropylene / tie / EVOH / tie / polypropylene}. Other high-barrier multi-layer structures can be used for the container body and/or lid.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 is a schematic cross-sectional view of a thermoformed container in accordance with one embodiment of the invention;
FIG. 2 is a schematic fragmentary cross-sectional view of the container of FIG. 1 illustrating on an enlarged scale the lid sealed to the container body to show the multi-layer structures of the lid and container body, and the hot melt adhesive therebetween;
FIG. 3 is a schematic cross-sectional view of a blow-molded container in accordance with another embodiment of the invention;
FIG. 4 is a schematic fragmentary cross-sectional view of a container in accordance with yet another embodiment of the invention having a metal ring and membrane lid closure; and
FIG. 5 is a schematic fragmentary cross-sectional view of the container of FIG. 4 illustrating on an enlarged scale the lid sealed to the metal ring to show the multi-layer structures of the lid and the hot melt adhesive for sealing the lid to the ring.

### DETAILED DESCRIPTION OF THE INVENTION

The present inventions now will be described more fully hereinafter with reference to the accompanying drawings, in which some but not all embodiments of the invention are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

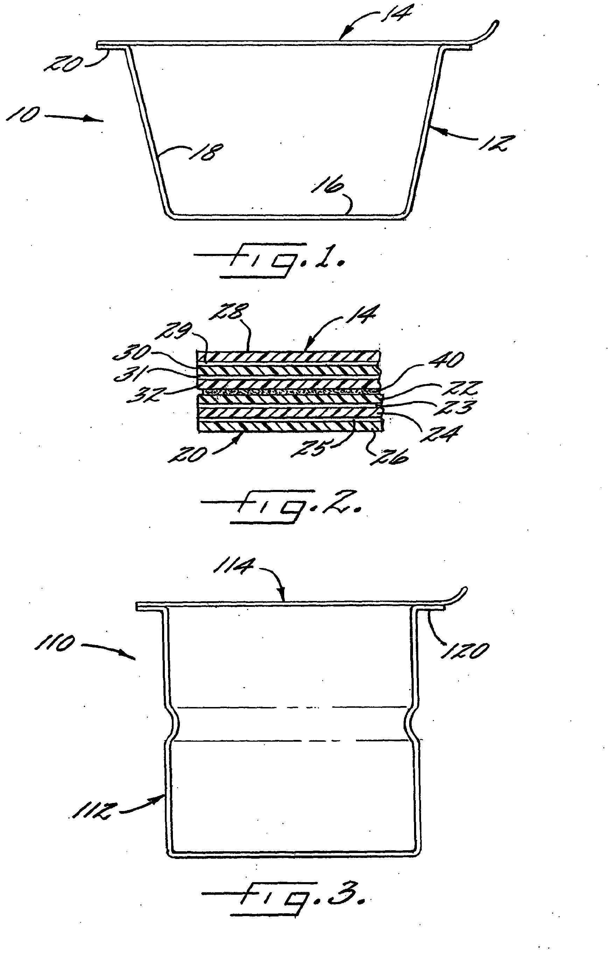

FIG. 1 illustrates a first embodiment of the invention as applied to a plastic thermoformed container **10.** The container **10** comprises a container body **12** and a lid **14.** The container body **12** is formed by thermoforming a multi-layer high-barrier sheet. The container body **12** has a bottom wall **16,** and an upstanding side wall **18** that preferably flares (i.e., gets larger in diameter) in the upward direction for ease of removal of the container body from the mold (not shown). At the upper end of the side wall **18** a radially extending flange **20** is formed as an extension of the side wall. The flange provides a sealing surface to which the lid **14** is sealed.

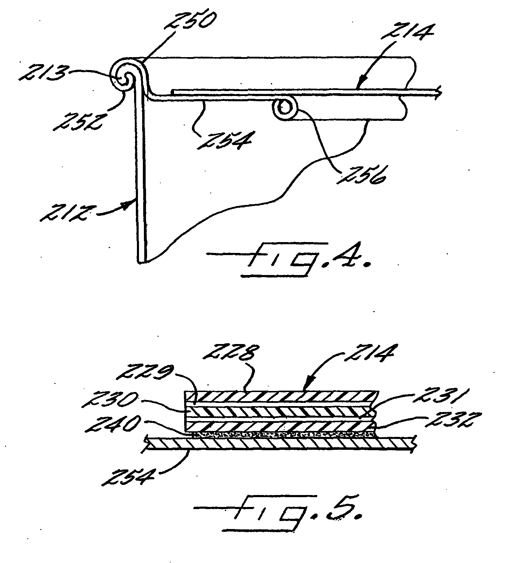

With reference to FIG. 2, the multi-layer high-barrier sheet that forms the container body can comprise, for example, a first layer **22** forming the inner surface of the container and hence the upper surface of the flange **20,** a second layer **24,** and a third layer **26,** wherein the second layer **24** is disposed between the first layer **22** and the third layer **26.** Tie layers **23, 25** can be included between the first and second layers and between the second and third layers, respectively, for binding the layers together. The first layer **22** can comprise a polypropylene, which is a good barrier against moisture but is not particularly effective against oxygen. The second layer **24** can be an ethylene vinyl alcohol copolymer (EVOH), which has good oxygen barrier properties but is deleteriously affected by exposure to moisture. The third layer **26** can comprise a polypropylene. Thus, the polypropylene layers provide moisture barrier performance and protect the EVOH layer from exposure to moisture, and the EVOH layer provides oxygen barrier performance. Various other structures can be used for the multi-layer sheet from which the container body **12** is formed, the invention not being limited to any particular structure.

FIG. 2 also shows that the lid **14** can comprise a multi-layer structure similar to that of the container body. Thus, the illustrated lid has a first layer **28,** a second layer **30** and a third layer **32,** which can be joined together with tie layers **29, 31** if necessary or desirable. The first and third layers can comprise a polypropylene, and the second layer can comprise EVOH. Alternative lid constructions can be used, the invention not being limited to any particular lid structure.

The lid **14** is bonded to the flange **20** of the container body by a hot melt adhesive **40.** The adhesive **40** is formulated to provide a temperature-dependent bond strength between the lid **14** and the container body **12.** More specifically, the bond strength is relatively low at room temperature so that the lid can be readily peeled from the container body, while the bond strength is higher at retort temperatures of about 100° C to 120° C. The adhesive preferably comprises a substantially amorphous polyamide-based composition having a glass transition temperature, Tg, that is approximately room temperature (e.g., 20° C to 40° C). When amorphous polymers are near their glass transition temperature, they tend to lose their adhesiveness. Accordingly, by engineering the adhesive **40** so that its T_{g} is near room temperature, the bond strength provided by the adhesive is relatively low at room temperature. However, at retort temperatures, which are substantially above T_{g}, the adhesive has greater adhesiveness and hence provides a stronger bond. In this manner, the lid can be bonded to the container body firmly enough to withstand retort without failure, and yet the lid can easily be peeled off when the consumer desires to open the container.

A suitable adhesive **40** can comprise a polyamide resin having a T_{g} that is less than or equal to 0° C, and a second resin that raises the T_{g} of the adhesive to about room temperature. The polyamide resin can be, for example, the resin available from Arizona Chemical of Jacksonville, Florida, having the designation UNI-REZ® 2617. This resin has a tensile modulus of 205 MPa (30,000 psi), a softening point (ASTM E 28 ring and ball method) of 163° C to 175° C, and a shear adhesion failure temperature or SAFT (ASTM D 4498 method with a 1 kg. weight) of 150° C.

The second resin can be a maleic modified rosin ester. An example of a suitable material is SYLVACOTE® 7071 available from Arizona Chemical. This material is a maleic modified glycerine ester of tall oil rosin, and its recommended applications include as a film-forming resin for nitrocellulose-based packaging-gravure inks that contain acetone, and in lacquer wood furniture sealer and sander coats. It has a softening point (ASTM E 28-67 ring and ball method) of 125° C.

The T_{g}-raising resin is added to the polyamide resin in sufficient quantity to raise the T_{g} of the resulting composition to about room temperature. The composition can also contain other components as desired. As an example, the adhesive composition can comprise about 70 to 95 weight percent, more preferably about 80 to 90 weight percent, of polyamide resin, and about 30 to 5 weight percent, more preferably about 20 to 10 weight percent, of maleic modified rosin ester.

The adhesive should have a shear adhesion failure temperature (SAFT) above the expected temperature of retort, which is typically between about 100° C and about 120° C. While the addition of the maleic modified rosin ester to the polyamide resin, which on its own has an SAFT of about 150° C, is likely to bring the SAFT of the composition down somewhat below 150° C, it should still be above 120° C.

As noted, the invention is not limited to any particular container type or configuration. Thus, FIG. 3 shows an alternative container **110** having a container body **112** that is formed by coextrusion blow molding. The container body includes a flange **120** to which the lid **114** is bonded by a hot melt adhesive as previously described. The container body is formed by coextruding a parison as a multi-layer structure, enclosing the parison in a mold, inserting a blow pin into the parison, and inflating the parison to fill the mold. As known in the art, blow molding allows the manufacture of container shapes that cannot be made by thermoforming, which is generally limited to tapered shapes that can be lifted out of the open top end of the mold. In contrast, the molds used in blow molding are formed in left and right halves such that the mold is opened by moving the mold halves apart, and hence molded articles of non-tapered and other shapes can be made, such as illustrated in FIG. 3. The container body wall can have a multi-layer structure similar to that illustrated in FIG. 2, or can have alternative structures.

FIGS. 4 and 5 illustrate yet another type of container **210** to which the invention is applicable. The container includes a container body **212,** which can be of various materials and constructions including those described above or others, and a metal ring **250** that is affixed to the upper end of the container body. The ring is affixed to the container body by double-seaming, wherein a curled outer edge portion **252** of the ring and a curled top edge portion **213** of the container body are rolled together to provide a hermetic joint therebetween. The ring includes an annular portion **254** that extends radially inwardly from the container body wall and terminates at a radially inner edge **256,** which can be curled as shown. The upper surface of the annular portion **254** constitutes a sealing surface to which the lid 214 of the container is sealed by a hot melt adhesive **240.**

The lid **214** can have various constructions. The exemplary construction shown in FIG. 5 includes a first layer **228,** a tie layer **229,** a second layer **230,** a tie layer **231,** and a third layer **232.** The first and third layers can comprise polypropylene, and the second layer can comprise EVOH.

In the various embodiments described above, materials other than those listed above can be used. For instance, instead of the maleic modified glycerine ester of tall oil rosin, the adhesive can employ other T_{g}-raising materials. Furthermore, while container body and lid structures have been described that include a barrier structure of the type {polypropylene / tie / EVOH / tie / polypropylene}, other structures can be used. For instance, the barrier structure can include aluminum oxide-coated polymer film, SiOx-coated polymer film, metallized film, polyacrylonitrile, and others.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A retort container, comprising:
a container body structured and arranged for holding a food product, the container body defining an opening and a sealing surface surrounding the opening; and
a lid bonded to the sealing surface of the container body to close the opening, the lid being bonded to the sealing surface with a hot melt adhesive, the adhesive having a glass transition temperature of about room temperature, the adhesive bonding the lid to the sealing surface with a temperature-dependent bond strength that is relatively low at room temperature and substantially higher at retort temperatures of 100° C to 120° C.

2. The retort container of claim 1, wherein the adhesive comprises a polyamide resin blended with a second resin that raises the glass transition temperature of the adhesive above the glass transition temperature of the polyamide resin alone.

3. The retort container of claim 2, wherein the second resin comprises a maleic modified rosin ester.

4. The retort container of claim 3, wherein the adhesive comprises about 10 to 20 weight percent of the maleic modified rosin ester.

5. The retort container of claim 1, wherein the container body is formed entirely of polymer material.

6. The retort container of claim 1, wherein the lid is formed entirely of polymer material.

7. The retort container of claim 1, wherein the lid and the container body each is formed entirely of polymer material.

8. The retort container of claim 1, wherein the container body comprises a multi-layer body wall.

9. The retort container of claim 8, wherein the container body comprises a thermoformed multi-layer sheet.

10. The retort container of claim 8, wherein the container body comprises a coextrusion blow-molded structure.

11. The retort container of claim 8, wherein the multi-layer sheet includes a first polymer layer providing moisture barrier performance and a second polymer layer providing oxygen barrier performance.

12. The retort container of claim 11, wherein the first polymer layer comprises polypropylene and the second polymer layer comprises ethylene vinyl alcohol copolymer.

13. The retort container of claim 12, wherein the multi-layer sheet further comprises a third polymer layer of polypropylene, the ethylene vinyl alcohol copolymer layer being disposed between the polypropylene layers.

14. The retort container of claim 1, wherein the lid comprises a multi-layer structure.

15. The retort container of claim 14, wherein the lid includes at least a first polymer layer providing moisture barrier performance and a second polymer layer providing oxygen barrier performance.

16. The retort container of claim 1, wherein the hot melt adhesive comprises a first resin having a glass transition temperature substantially lower than 20° C, and a second resin added to the first resin to raise the glass transition temperature of the adhesive to about 20° C to 40° C.

17. A hot melt adhesive suitable for retort containers, comprising:
a polyamide resin having a glass transition temperature less than or equal to about 0° C; and
a maleic modified rosin ester blended with the polyamide resin to form the hot melt adhesive, the maleic modified rosin ester being present in the hot melt adhesive in sufficient proportion to give the hot melt adhesive a glass transition temperature of about room temperature.

18. The hot melt adhesive of claim 17, wherein the polyamide resin comprises about 70 to 95 weight percent of the adhesive and the maleic modified rosin ester comprises about 30 to 5 weight percent of the adhesive.

19. The hot melt adhesive of claim 17, wherein the polyamide resin comprises about 80 to 90 weight percent of the adhesive and the maleic modified rosin ester comprises about 20 to 10 weight percent of the adhesive.
